# EUROPEAN PATENT APPLICATION

(11) **EP 2 067 570 A1**
(43) Date of publication of application: **10.06.2009**
(21) Application number: 07380338.9
(22) Date of filing: 04.12.2007
(51) Int. Cl.: B23Q 3/157, B25J 15/00

(54) **Robotic cell for loading and unloading cutting tools**

(71) Applicant: Casal Tubet, Francisco, 48610 Urduliz Vizcaya (ES)
(72) Inventor: Casal Tubet, Francisco, 48610 Urduliz Vizcaya (ES)
(74) Representative: Carvajal y Urquijo, Isabel

(57) **Abstract**

The invention relates to a robotic cell for loading and unloading cutting tools comprising at least:
(i) a robot arm (100) having a grip (200) integrally joined to its end;
(ii) cleaning means (300) for cleaning the tools;
(iii) a rotational cutting tool magazine (400);

in which the robot arm (100) further has within its operating range the grip (200), the magazine (400), the cleaning means (300) and the entrance to the section line (500).

## Description

### Object of the Invention

The present invention describes a robotic cell for loading and unloading cutting tools such as for example cutting blades, metal separators and vulcanized separators of the shafts of longitudinal cutting machines. Said cell comprises the use of a robot with six shafts equipped with a grip, a magazine with twelve columns each equipped with five shafts and a machine for cleaning the cutting tools equipped with a computer vision system.

### Field of the Invention

The field of the invention relates to industrial robotic systems for handling tools.

### Background of the Invention

Currently, the handling of tools is carried out manually in which the operator has a list with a number of cutting tools and references thereof as well as the assembly order. The cutting tools are placed in their corresponding magazines, in which the operator takes the tool according to the assembly order of the list and places it in the shaft of the linear cutting machine one by one until completing the entire list of approximately 150 tools. It must be taken into account that each tool has a weight ranging between a few grams up to 30 kilograms in a machine with average capacity.

When unloading the tools from the longitudinal cutting machine, the operator must extract the cutting tools from the shafts of said machine one by one and place them in their corresponding magazine according to their reference. It is at this point when the operator handles the cutting tools with a cloth and verifies the cutting tools and when he or she deposits them in an area for maintenance, in the event of deterioration thereof.

In order to automate said process, the German company *Norder Lagertechnik GmBH* has developed a system for changing tools protected by European patent EP 1 142 662. Said system neither incorporates a robot with six shafts, nor does it have a magazine for smaller tools, nor does it have an automatic cleaning system or optional computer vision means for controlling the cutting blades.

### Description of the Invention

To reduce the problems mentioned above the robotic cell for loading and unloading cutting tools object of the present invention is provided. Said cell comprises at least:
(i) a robot with six shafts in turn comprising a grip;
(ii) a magazine with at least twelve columns, each equipped with five shafts for placing the cutting tools and in which said magazine is located on a rotating table.
(iii) Means for cleaning the tools in turn comprising a computer vision system.

The robot comprises a base in which the grip is fixed, wherein this base is further assembled on four linear bearings and directed by a pneumatic cylinder (or damper). This base has two functions; the first would consist of absorbing a possible collision and the second function would consist of acting when the nylon ring contacts the tool, moving the base of the grip a few millimeters to the position of a detector, assuring that the tool has been introduced into the fixing area of the grip. Said grip for carrying tools comprises at least:
(i) a parallel clamp provided with two arms with their corresponding fingers, with sufficient travel to absorb the differences in diameter of the blades and vulcanized separators to the diameter of the metal separators for the tools with a thickness of more than four millimeters.
(ii) a racket with its suction cup holder to handle the tools with a thickness of less than four millimeters, in which said suction cups are protected by a nylon disc withstanding the contact with the tools; and
(iii) a photocell for detecting "tool" presence during the entire handling thereof.

The base on which the grip is supported in the robot has two detectors. The first one makes sure that the grip is in the position for handling the tools, whereas the second is an end of travel for the base of the grip ordering the robot to stop in order to prevent collisions.

The plate fixed to the arm of the robot comprises a plurality of linear guides and the base of the damper cylinder. The linear bearings fixed to the base of the grip act on these linear guides, allowing the movement thereof upon taking the tools and also in a supposed collision.

The robot equally comprises a blow nozzle blowing on the tool with enough power to prevent it from adhering to the contiguous tool.

The cleaning means comprised in the present invention are necessary given that the tools can come out of the machine with grease and chips and on some occasions the edge of the cutting tools may have deteriorated. Said cleaning means comprise at least:
(i) blow nozzles and scraping means comprising two drive shafts with a drive key;
(ii) computer vision means;
in which the robot places the tools in said shafts and in which two articulated devices position the rackets on both sides of the tool with an established pressure, the drive shafts then rotate 360° and the two air nozzles placed parallel with the scrapers and a blow nozzle facing the central area of the tools blow, eliminating contaminating particles.

When the drive shafts have rotated 360° in one direction, they rotate 360° again in the opposite direction at the same time that computer vision equipment supervises the cutting edge of the tools. When the vision equipment detects any deterioration in the edge, it sends a signal to the robot so that the tool is deposited in an arm of the magazine for maintenance.

From the shaft of the machine to the corresponding arm of the magazine, vision and cleaning management is programmable for being performed upon dismantling the tools of the shaft of the machine (crosspiece) or at different times, for example when the longitudinal cutting machine is stopped.

The tool magazine places the tools in a plurality of shafts correspondingly labeled with the reference of each tool. The robot manages the sequence of the rotating plate of the magazine in order to position the shafts for reaching the grip of the robot according to the work mode selected.

The operation of the cell is as follows:
(i) The magazine positions the tools within reach of the robot and then places them in the shaft of the machine until completing all loading programmed in said shafts.
(ii) The system has each load in the shafts of the machine saved in its memory, takes out the tools from the shafts and deposits them in their corresponding location in the magazine.
(iii) In order to unload the tool, the tool is removed from the shaft and placed in the cleaning means in one of the two existing housings (the empty one) and the tool is then taken from the cleaning means of another housing and deposited in its corresponding location of the magazine.
(iv) A complete cleaning of the magazine is possible by removing all the tools from the magazine, passing them through the cleaning equipment and returning them to the magazine in their corresponding location.
(v) The computer vision is carried out at the same time as the cleaning. In the event of detecting deterioration in the cutting tools, they are deposited in the column of the magazine provided for maintenance.

### Brief Description of the Drawings

A series of drawings will be very briefly described below aiding to better understand the invention and which are specifically related to an embodiment of said invention presented as a non-limiting example thereof.

Figure 1 shows a plan elevational view of the robotic cell for loading and unloading cutting tools on a rotating platform object of the present invention.

Figure 2 shows a plan elevational view of the grip of the robot arm integrated in the robotic cell for loading and unloading cutting tools object of the present invention.

Figure 3 shows a plan elevational view of a detail of the joint between the grip and the robot arm integrated in the robotic cell for loading and unloading cutting tools object of the present invention.

Figure 4 shows a plan elevational view of the cleaning equipment integrated in the robotic cell for loading and unloading cutting tools object of the present invention.

Figure 5 shows a plan elevational view of the tool magazine integrated in the robotic cell for loading and unloading cutting tools object of the present invention.

Figure 6 shows a block diagram of the operational process of the robotic cell for loading and unloading cutting tools object of the present invention.

### Preferred Embodiment of the Invention

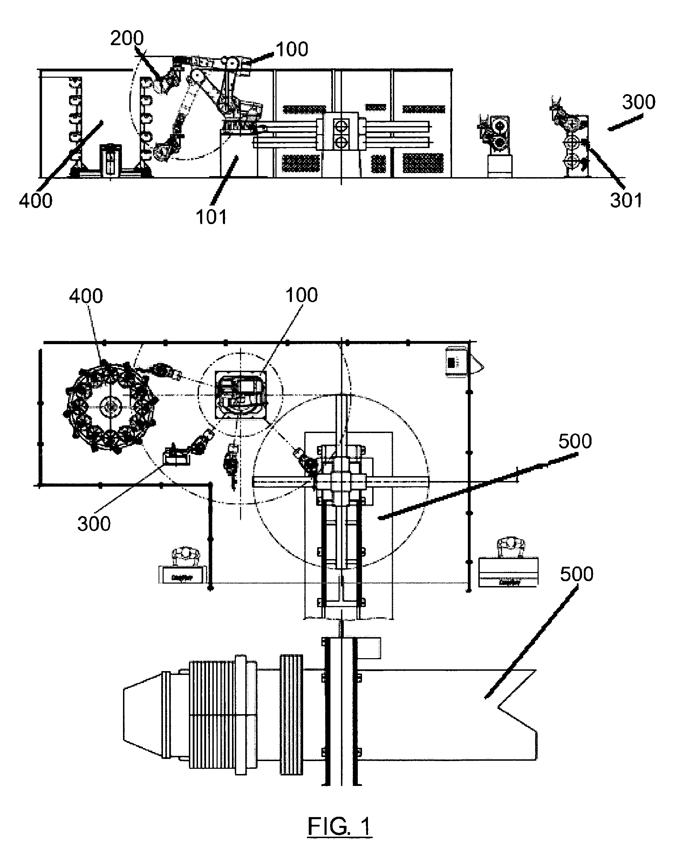

As seen in Figure 1, the robotic cell for loading and unloading cutting tools object of the present invention comprises at least:
(i) a robot arm (100), preferably with 6 shafts having a grip (200) integrally joined to its end;
(ii) cleaning means (300) for cleaning the tools, said means in turn comprising a computer vision system (301);
(iii) a rotational cutting tool magazine (400);
in which the robot arm (100) is further located on a rotating platform (101) such that within its operating range it can reach with its grip (200) the magazine (400), the cleaning means (300) and the entrance to the cutting line (500).

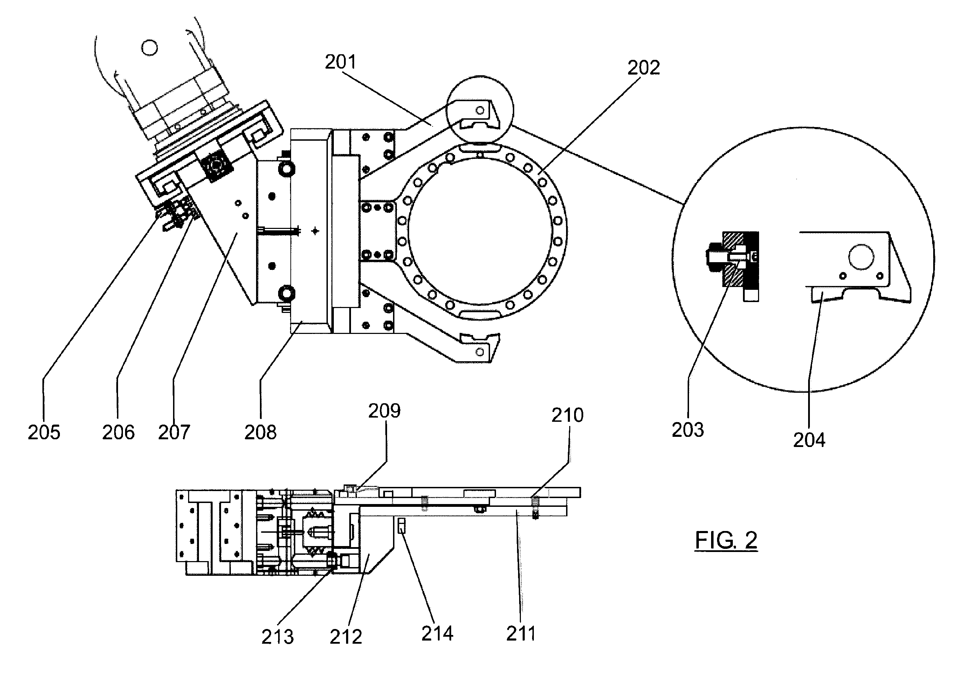

Figure 2 shows in detail how the grip (200) is built, in which said grip (200) comprises at least:
(i) a parallel pneumatic clamp (208) provided with two arms (201) and supported by the clamp support block (207) and in which the fingers of the arms (201) comprise a rocker arm consisting of:
   a. a shaft (203) of the rocker arm;
   b. a finger (204) of the rocker arm;
(ii) a suction cup holder racket (211) in which the suction cups (210) are protected by a nylon disc (202), said racket (211) being further held by a support (212) and centered in its position by a ring (213);
(iii) a tool presence detector (214) during the entire handling of said tool;
(iv) a blow nozzle (209) to prevent the tools from adhering; and
(v) a plurality of inductive detectors (205) located on a support (206) and in which said detectors (205) control on one hand that the grip (200) is in the handling position and on the other that it detects the base of the grip (200), such that it orders the stopping of the robot arm (100) in order to prevent collisions.

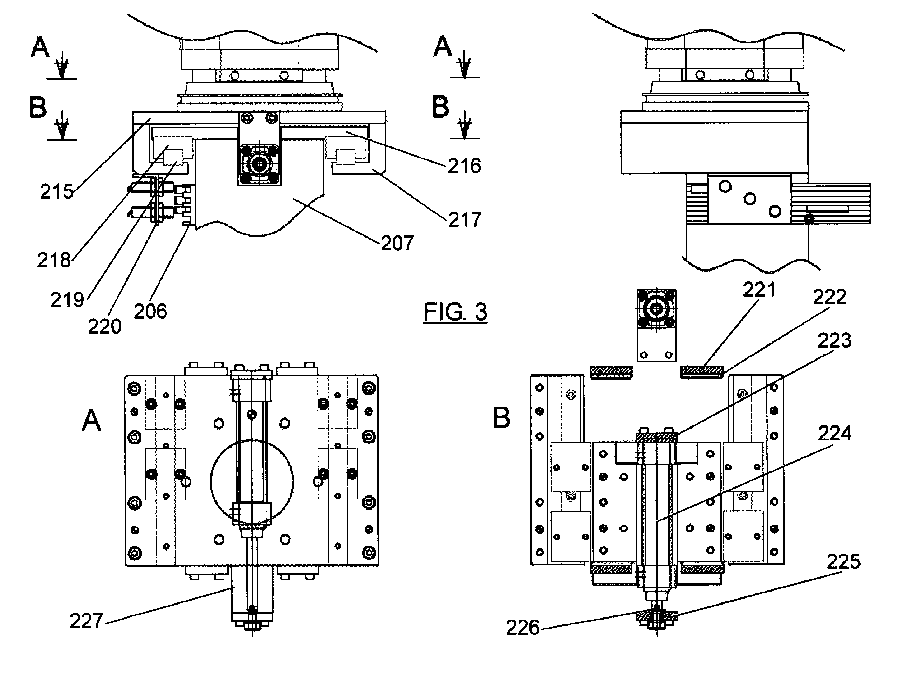

As seen in Figure 3 the joint between the robot arm (100) and the grip (200) comprises at least:
(i) an anchoring flange (215) and a coupling plate for the skids (216) together with the rail supports (217);
(ii) guiding means in turn comprising a plurality of guide rails (219) and guide skids (218) sliding on the rails (219), such that the clamp support block (207) fits in the support integrally joined to the end of the robot arm (100);
(iii) support means for the inductive detectors (203), said means comprising at least a detector support bracket (220) and a cam support (206);
(iv) a pneumatic cylinder (224), in turn comprising a support plate for the cylinder (223) and a travel stop plate (225), a tube (226) and a plug (227); and
(v) a plurality of stop plates (221) associated to a plurality of dollies (222).

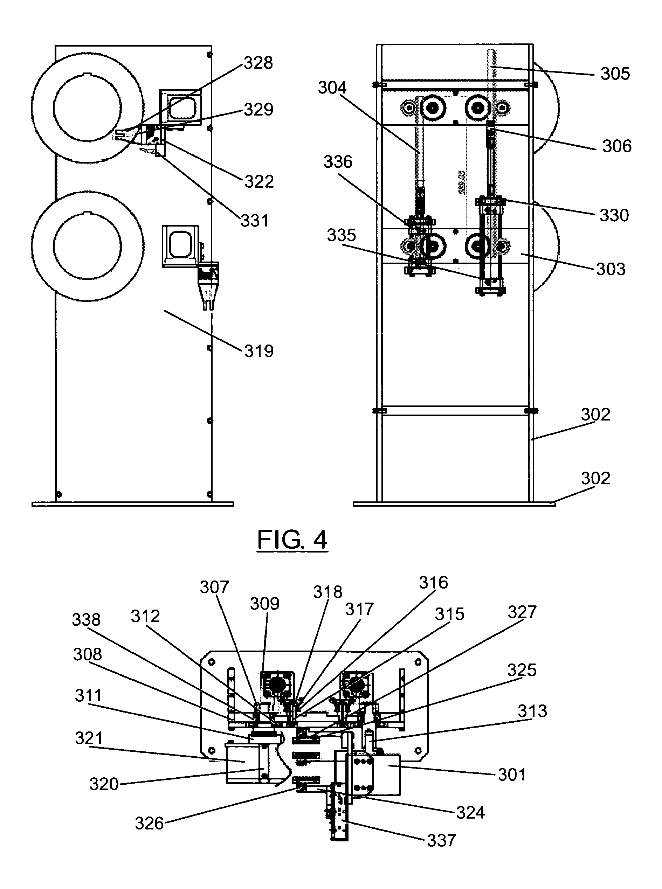

Figure 4 shows how the cleaning means (300) of the tools comprise at least:
(i) a plurality of cleaning frame plates (319) and (302) on which a sheet (322) is supported in turn containing a blow nozzle (331) and a linear carriage (337) carrying a blade flange (328) and a scraper (329);
(ii) a first rack (304) and a second rack (305), both racks carrying rack driving means (306), said shafts being housed in a plate (303), and in which said racks are joined to a first cylinder (335) and to a second cylinder (336) and both in turn on a cylinder support (330);
(iii) a plurality of pinions (307) covering the first rack (304) and second rack (305) and which are joined to a pinion shaft (308), a ball bearing (338), a first washer (309), a second washer (318) and a ring (312);
(iv) a rack supporting eccentric shaft (315), a rack thrust bearing (316) and a cover (317) for the rack thrust bearings;
(v) a plurality of cleaning discs (321) with a key (320) joined to the pre-clamp disc (311) and there to the pinion shaft (308);
(vi) computer vision means (301);
(vii) a shaft of the scraping pinion (313);
(viii) a linear carriage (337) moving on a shaft (326) such that the moving blade (324) performs its task; and
(ix) a fixed blade (327) on a support (325).

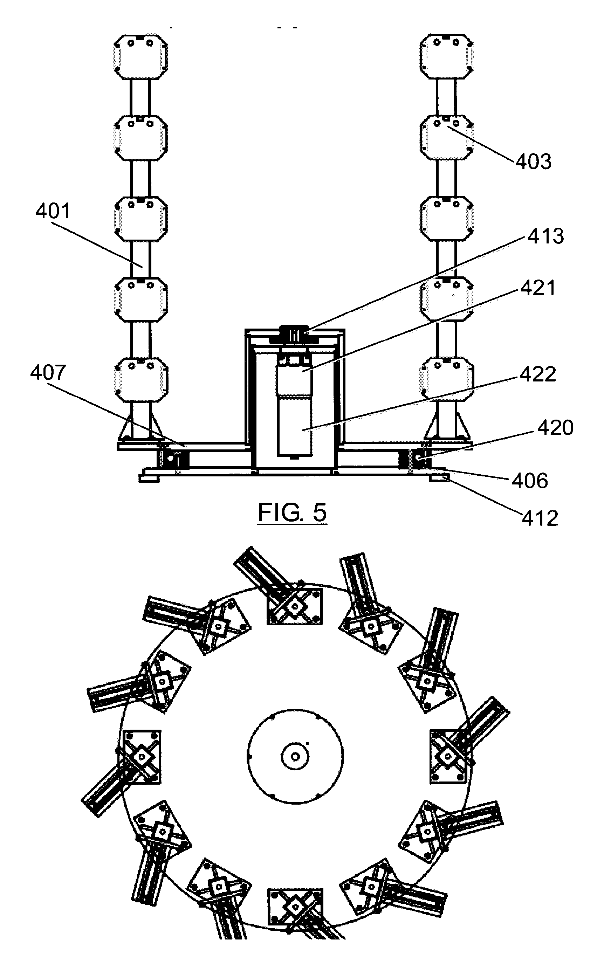

Figure 5 shows the assembly of the rotating magazine (400) which comprises at least:
(i) a frame (401) supporting a plurality of blade holding bars (403) in which said frame (401) is supported on an upper plate (407) rotating on the plate base (406) and the support blocks (412) as a result of the ring (420);
(ii) a motor (422), a gear reducer (421) connected to the motor and a cover (413) closing the assembly, with the shaft integrally joined to the geometric center of the upper plate (407).

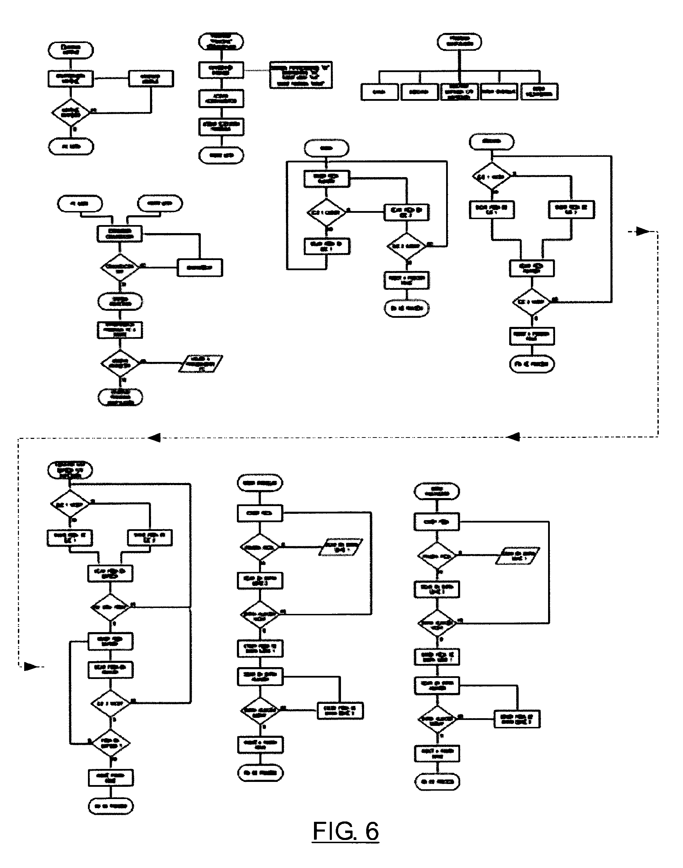

The operation of the robotic cell can be seen in Figure 6. Said process comprises at least:
(i) a first step for initializing the programming of a personal computer after checking the assembly; and a second step in parallel for initializing of the robot after checking that the initial conditions are met;
(ii) a second step for communicating between the personal computer and the robot arm, in which if the communication is correctly verified the program of the personal computer is then transferred to the robot arm, ready for execution; and
(iii) a third step for handling the tools comprising at least the sub-processes of:
   a. loading;
   b. unloading;
   c. unloading for cleaning and/or inspection;
   d. rotating the blades;
   e. rotating vulcanizates;
In which the loading sub-process comprises the steps of taking the part with a first shaft; if this shaft is full, then taking it with the second shaft, and if this shaft is also full then returning to the initial position.

The unloading sub-process comprises the steps of checking that the first shaft is empty; if it is, then taking the part out of the second shaft and leaving it in the magazine; when the shaft second is also empty, the robot arm returns to the origin.

The unloading sub-process with cleaning and/or inspection comprises the steps of checking if the first shaft is empty; if it is, taking the part out of the shaft second, if it is not empty, taking the part out of the shaft first; after this, the part is left to clean. The clean part is subsequently taken and left in the magazine until there are no more parts and then it returns to the origin.

The blade rotation sub-process as well as the vulcanizate rotation sub-process comprises the steps of taking the part and checking if it is the first or second part so as to leave it on the corresponding free bar and subsequently leaving it in the magazine, after which the robot arm returns to the origin.

## Claims

1. A robotic cell for loading and unloading cutting tools, **characterized in that** it comprises at least:
(i) a robot arm (100) having a grip (200) integrally joined to its end;
(ii) cleaning means (300) for cleaning the tools;
(iii) a rotational cutting tool magazine (400);
in which the robot arm (100) further has within its operating range the grip (200), the magazine (400), the cleaning means (300) and the entrance to the cutting line (500).

2. A robotic cell for loading and unloading cutting tools according to claim 1, **characterized in that** the robot arm (100) has 6 shafts.

3. A robotic cell for loading and unloading cutting tools according to claim 1, **characterized in that** the grip (200) comprises at least:
(i) a parallel pneumatic clamp (208) provided with two arms (201) and supported by the clamp support block (207) and in which the fingers of the arms (201) comprise a rocker arm consisting of:
a. a shaft (203) of the rocker arm;
b. a finger (204) of the rocker arm;
(ii) a suction cup holder racket (211) in which the suction cups (210) are protected by a nylon disc (202), said racket (211) being further held by a support (212) and centered in its position by a ring (213);
(iii) a tool presence detector (214) during the entire handling of said tool;
(iv) a blow nozzle (209) to prevent the tools from adhering to one another; and
(v) a plurality of inductive detectors (205) located on a support (206) and in which said detectors (205) control on one hand that the grip (200) is in the handling position and on the other that it detects the base of the grip (200), such that it orders the stopping of the robot arm (100) in order to prevent collisions.

4. A robotic cell for loading and unloading cutting tools according to the previous claims, **characterized in that** the joint between the robot arm (100) and the grip (200) comprises at least:
(i) an anchoring flange (215) and a coupling plate for the skids (216) together with the rail supports (217);
(ii) guiding means in turn comprising a plurality of guide rails (219) and guide skids (218) sliding on the rails (219), such that the clamp support block (207) fits in the support integrally joined to the end of the robot arm (100);
(iii) support means for the inductive detectors (203), said means comprising at least one detector support bracket (220) and a cam support (206);
(iv) a pneumatic cylinder (224) in turn comprising a support plate for the cylinder (223) and a travel stop plate (225), a tube (226) and a plug (227); and
(v) a plurality of stop plates (221) associated to a plurality of dollies (222).

5. A robotic cell for loading and unloading cutting tools according to claim 1, **characterized in that** the cleaning means (300) of the tools comprise at least:
(i) a plurality of cleaning frame plates (319) and (302) on which a sheet (322) is supported in turn containing a blow nozzle (331) and a linear carriage (337) carrying a blade flange (328) and a scraper (329);
(ii) a first rack (304) and a second rack (305), both racks carrying rack driving means (306), said shafts being housed in a plate (303), and in which said racks are joined to a first cylinder (335) and to a second cylinder (336) and both in turn on a cylinder support (330);
(iii) a plurality of pinions (307) covering the first rack (304) and second rack (305) and which are joined to a pinion shaft (308), a ball bearing (338), a first washer (309), a second washer (318) and a ring (312);
(iv) one rack supporting eccentric shaft (315), a rack thrust bearing (316) and a cover (317) for the rack thrust bearings;
(v) a plurality of cleaning discs (321) with a key (320) joined to the pre-clamp disc (311) and there to the pinion shaft (308);
(vi) computer vision means (301);
(vii) a shaft of the scraping pinion (313);
(viii) a linear carriage (337) moving on a shaft (326) such that the moving blade (324) performs its task; and
(ix) a fixed blade (327) on a support (325).

6. A robotic cell for loading and unloading cutting tools according to claim 1, **characterized in that** the rotational magazine (400) comprises at least:
(i) one frame (401) supporting a plurality of blade holding bars (403) in which said frame (401) is supported on an upper plate (407) rotating on the base plate (406) and the support blocks (412) as a result of the ring (420);
(ii) a motor (422), a gear reducer (421) connected to the motor and a cover (413) closing the assembly, with the shaft integrally joined to the geometric center of the upper plate (407).

7. A use process implemented in the robotic cell of claims 1 to 6, **characterized in that** it comprises at least:
(i) a first step for initializing the programming of a personal computer after checking the assembly; and a second step in parallel for initializing of the robot after checking that the initial conditions are met;
(ii) a second step for communicating between the personal computer and the robot arm, in which if the communication is correctly verified the program of the personal computer is then transferred to the robot arm, ready for execution; and
(iii) a third step for handling the tools comprising at least the sub-processes of:
a. loading;
b. unloading;
c. unloading for cleaning and/or inspection;
d. rotating the blades;
e. rotating vulcanizates;

8. A use process implemented in the robotic cell according to claim 7, **characterized in that** the loading sub-process comprises the steps of taking the part with a first shaft; if this shaft is full, then taking it with the second shaft, and if this shaft is also full then returning to the initial position.

9. A use process implemented in the robotic cell according to claim 7, **characterized in that** the unloading sub-process comprises the steps of checking that the first shaft is empty; if it is, then taking the part out of the second shaft and leaving it in the magazine; when the shaft second is also empty, the robot arm returns to the origin.

10. A use process implemented in the robotic cell according to claim 7, **characterized in that** the unloading sub-process with cleaning and/or inspection comprises the steps of checking if the first shaft is empty; if it is, taking the part out of the shaft second, if it is not empty, taking the part out of the shaft first; after this, the part is left to clean; the clean part is subsequently taken and left in the magazine until there are no more parts and then it returns to the origin.

11. A use process implemented in the robotic cell according to claim 7, **characterized in that** the blade rotation sub-process as well as the vulcanizate rotation sub-process comprises the steps of taking the part and checking if it is the first or second part so as to leave it in the corresponding free bar and subsequently leaving it in the magazine, after which the robot arm returns to the origin.

## Amended claims

### Amended claims in accordance with Rule 137(2) EPC.

**1.** A robotic cell for loading and unloading cutting tools, comprising at least:
a robot arm (100) having a grip (200) integrally joined to its end due to joining means between the robot arm (100) and the grip (200);
cleaning means (300) configured to clean the tools; and
a rotational cutting tool magazine (400);
in which the robot arm (100) and the grip (200)further has within its operating range the magazine (400), the cleaning means (300) and the entrance to the cutting line (500) **characterized in that**
said grip (200) joined to the robot arm (100) further comprises, at least, a parallel pneumatic clamp (208) provided with two arms (201); a suction cup holder racket (211); a blow nozzle (209) to prevent the tools from adhering to one another; and a plurality of detectors; *«based* on *description page 4, lines 32 to page 5 line 13 or page 2 lines 13-35 »*;
said rotational cutting tool magazine (400) comprises a motorized (422) frame (401) supporting a plurality of blade holding bars (403); said frame (401) being supported on an upper plate directly connected with the motor (422) shaft and rotating on the base plate (406); in which said frame (401) is configured to reach the grip (200) of the robot arm (100) according to the work mode selected depending on the commands of the robot arm (100); *«based on description page* 3, *lines 18-22»;* and
wherein the cleaning means (300) comprises at least, blow nozzles (331); scraping means with two drive shafts with a drive key; and computer vision means (301) configured to detect any deterioration in the edge of the tool; and in which the robot arm (100) places the tools in the scraping means drive shafts in such way that said shafts then rotate 360° and the air nozzles placed parallel with the scrapers and a blow nozzle facing the central area of the tools blow, eliminating contaminating particles. *«based on description page 3, lines 1-12»*

**2.** A robotic cell for loading and unloading cutting tools according to claim 1, **characterized in that** the robot arm (100) has 6 shafts.

**3.** A robotic cell for loading and unloading cutting tools according to claim 1 and 2, wherein the fingers of the arms (201) comprise a rocker arm consisting of:
a. a shaft (203) of the rocker arm;
b. a finger (204) of the rocker arm.

**4.** A robotic cell according to claim 1 wherein the suction cup holder racket (211) comprises a plurality of suction cups (210) that are protected by a nylon disc (202), said racket (211) being further held by a support (212) and centered in its position by a ring (213).

**5.** A robotic cell according to previous claims wherein the plurality of detectors comprised in the grip (200) further comprise, at least:
a tool presence detector (214) during the entire handling of said tool; and
a plurality of inductive detectors (205) located on a support (206) and in which said detectors (205) control on one hand that the grip (200) is in the handling position and on the other that it detects the base of the grip (200), such that it orders the stopping of the robot arm (100) in order to prevent collisions.

**6.** A robotic cell for loading and unloading cutting tools according to the previous claims, wherein the join means between the robot arm (100) and the grip (200) comprises at least:
an anchoring flange (215) and a coupling plate for the skids (216) together with the rail supports (217);
guiding means in turn comprising a plurality of guide rails (219) and guide skids (218) sliding on the rails (219), such that the clamp support block (207) fits in the support integrally joined to the end of the robot arm (100);
support means for the inductive detectors (203), said means comprising at least one detector support bracket (220) and a cam support (206);
a pneumatic cylinder (224) in turn comprising a support plate for the cylinder (223) and a travel stop plate (225), a tube (226) and a plug (227); and
a plurality of stop plates (221) associated to a plurality of dollies (222).

**7.** A robotic cell for loading and unloading cutting tools according to claim 1, wherein the blow nozzle (331) is contained in a plurality of cleaning frame plates (319) and (302) on which a sheet (322) is supported and a linear carriage (337) carrying a blade flange (328) and a scraper (329).

**8.** Robotic cell according to previous claims wherein the scraping means drive shafts of the cleaning means (300) further comprises a first rack (304) and a second rack (305), both racks carrying rack driving means (306), said shafts being housed in a plate (303), and in which said racks are joined to a first cylinder (335) and to a second cylinder (336) and both in turn on a cylinder support (330);
a plurality of pinions (307) covering the first rack (304) and second rack (305) and which are joined to a pinion shaft (308), a ball bearing (338), a first washer (309), a second washer (318) and a ring (312);
one rack supporting eccentric shaft (315), a rack thrust bearing (316) and a cover (317) for the rack thrust bearings; a plurality of cleaning discs (321) with a key (320) joined to the pre-clamp disc (311) and there to the pinion shaft (308);
a shaft of the scraping pinion (313);
a linear carriage (337) moving on a shaft (326) such that the moving blade (324) performs its task; and
a fixed blade (327) on a support (325).
